# EUROPÄISCHE PATENTSCHRIFT

(11) **EP 2 466 175 B1**
(45) Veröffentlichungstag und Bekanntmachung des Hinweises auf die Patenterteilung: **12.06.2013**
(21) Anmeldenummer: 11009740.9
(22) Anmeldetag: 09.12.2011
(51) Int. Cl.: F16K 37/00, H02K 7/18, H02K 35/02

(54) **Elektropneumatisches Feldgerät**
Electro-pneumatic field device
Appareil de terrain électropneumatique

(30) Priorität: 17.12.2010 DE 102010054878
(43) Veröffentlichungstag der Anmeldung: 20.06.2012
(73) Patentinhaber: Samson Aktiengesellschaft, 60314 Frankfurt (DE)
(72) Erfinder: Kolbenschlag, Stefan, 64291 Darmstadt (DE)
(74) Vertreter: Schmid, Nils T.F.

(56) Entgegenhaltungen:
- WO-A1-02/33811
- WO-A2-2010/124075
- DE-B3- 10 311 567
- US-A1- 2003 155 771

## Beschreibung

Die Erfindung betrifft ein elektropneumatisches Feldgerät zum Steuern oder Regeln eines pneumatischen Stellantriebs, der üblicherweise einen Prozessstoffstrom einer prozesstechnischen Anlage, wie einer Raffinerieanlage, Chemieanlage etc. oder einer Anlage der Fabrikautomation, einstellen soll. Die Erfindung betrifft auch ein Verfahren zum Wandeln pneumatischer Energie eines elektropneumatischen Feldgeräts in elektrische Energie.

Elektropneumatische Feldgeräte können heutzutage Mikroprozessoren und Speicherelemente besitzen. Weiterhin wird oftmals Zusatzsensorik - wie Temperaturfühler oder auch Drucksensoren - verwendet. Insbesondere Stellungsregler enthalten zum Teil komplexe Berechnungen: die Eingangs- und Ausgangssignale werden durch Rechnungen verändert, komplexe Regelalgorithmen verwendet, Diagnoseparameter ermittelt und Ventilbewegungen erfasst und gespeichert, um eine Ventilposition genau zu regeln. I/P-Umformer empfangen demgegenüber einen Steuerstrom und erzeugen ein Steuerdrucksignal. Im Vergleich zu einem Stellungsregler fehlt ihnen die Rückführung der Ventilposition. Eine Rückführung des Drucksignals für I/P-Wandler zum Zwecke einer genaueren Regelung ist bekannt, aber bisher nicht marktüblich.

Elektropneumatische Feldgeräte werden sehr oft in explosionsgefährdeten Umgebungen eingesetzt und verwenden deswegen meist nur geringe elektrische Energie. Stellgeräte müssen typischerweise eine Notposition aufweisen, die eingenommen wird, falls es zu einem Ausfall der Energie kommt. Pneumatische Stellgeräte mit einem Federspeicher ermöglichen eine einfache, verlässliche, schnelle und kostengünstige Möglichkeit, die Notposition zu realisieren. Feldgeräte mit pneumatischem Ausgang sind deswegen üblich als elektrische Aktorik.

Bei modernen Anwendungen wird ein sogenanntes Zweileiterfeldgerät verwendet, das über zwei Leitungen sowohl die Stromversorgung als auch elektrische Steuer- oder Regelungsgrößen empfängt. Regel- und Steuerinformationen können mittels digitaler Protokolle bidirektional übertragen werden, wofür Feldprotokolle, wie HART, Profibus oder Foundation Fieldbus, genutzt werden.

Es besteht auf dem Gebiet der elektropneumatischen Feldgeräte, vor allem der Stellungsregler, die Tendenz, die Funktionalität des Geräts im Hinblick auf Regelung, Überwachung und Diagnose zu erhöhen, indem weitere mikroelektronische Komponenten und entsprechende Sensorik eingesetzt werden. Bei der Entwicklung entsprechender Bauelemente zeigte sich, dass die klassischerweise zur Verfügung stehende elektrische Energie für die Geräte höherer Intelligenz und erweiterter Funktionalität nicht oder kaum ausreicht oder zumindest hoher Entwicklungs- und Investitionsaufwand getätigt werden muss, um die gewünschte ausreichende elektrische Energieversorgung zu gewährleisten.

Des weiteren kann auf dem technischen Gebiet der elektropneumatischen Feldgeräte die Tendenz beobachtet werden, dass eine Kabelverbindung zur elektrischen Versorgung entbehrlich ist und die Kommunikation zwischen Regelungskomponenten beispielsweise über Funk realisiert wird. Solch ein Feldgerät ohne Versorgungsleitungen benötigt lokale Energiespeicher, wie Batterien, die aber eine begrenzte Lebenszeit aufweisen und damit einer Sicherheits-überwachung bedürfen.

Mit der oben genannten Problematik der zu geringen verfügbaren elektrischen Leistung für die Elektronik elektropneumatischer Feldgeräte beschäftigt sich DE 10 2006 011503 A1, aus der ein Ventilstellungsregler für pneumatisch betriebene Ventile einer Prozessautomatisierungsanlage bekannt ist. Der elektropneumatische Stellungsregler, der an einem pneumatischen Stellantrieb angeschlossen ist, umfasst einen Energiewandler, der aus der Druckluftversorgungsströmung elektrische Energie bereitstellen soll. Der Energiewandler kann eine Piezoelement-, Tauchspulen- oder Thermoelementausführung aufweisen. Es zeigt sich bei den bekannten Energiewandlungssystemen, dass die Einsetzbarkeit im Bereich der Prozesstechnik und/oder der Fabrikautomation nur bedingt vorliegt, weil die zur Verfügung gestellte elektrische Energie nicht ausreicht und vor allem der mechanische Aufwand sowie die Investitionskosten für derartige Systeme hoch sind.

Aus DE 10 2004 04930 A1 ist im Allgemeinen eine Energieumwandlungseinheit bekannt, bei der ein Schwingdauermagnet mittels eines Druckluftimpulses eine Hin- und Herschwingung ausführt, wobei die Dauermagnetbewegung in einer Spule elektrische Energie induziert. Für die Rückstellbewegung ist eine Druckfeder verantwortlich, die dem Druckimpuls entgegenwirkt. Auch beim Einsatz eines derartigen Systems zeigte sich, dass der Wirkungsgrad wenig zufriedenstellend niedrig ist. Vor allem aufgrund der Tatsache, dass die mechanische Rückstelldruckfeder sowie der Druckimpulsgenerator aufeinander abgestimmt sein müssen, ist der Einsatz der bekannten Energieumwandlungseinheit in der Prozesstechnik und/oder Fabrikautomation schwierig.

WO 2010/124075 A2 betrifft eine Vorrichtung zum Wandeln mechanischer Energie in elektrische und umgekehrt. Von DE 103 11 567 B3 ist ein seismischer Generator bekannt. US 2003/0155771 A1 offenbart einen elektrischen Generator mit einem Magneten und ferroflüssiger Lagerung. WO 02/33811 A1 betrifft eine Energieversorgungsvorrichtung.

Es ist Aufgabe der Erfindung, die Nachteile des Stands der Technik zu überwinden, insbesondere eine elektrische Energieversorgung für eine erweiterte Funktionalität von pneumatischen Feldgeräten in der Prozesstechnik und/oder Fabrikautomation bereitzustellen, wobei der mechanische Fertigungsaufwand möglichst gering gehalten werden soll.

Diese Aufgabe wird durch die Merkmale von Anspruch 1 gelöst.

Danach ist ein elektropneumatisches Gerät, wie ein elektropneumatisches Schaltventil oder ein elektropneumatischer Stellungsregler, zum Ansteuern eines pneumatischen Stellantriebs vorgesehen. Das elektropneumatische Feldgerät, das durchaus auch den pneumatischen Stellantrieb sowie das damit verbundene Stellventil umfassen kann, besitzt einen Energiewandler, der pneumatische Energie insbesondere der pneumatischen Energiequelle des Stellantriebs in elektrische Energie umwandelt. Der Energiewandler hat einen Schwingdauermagneten, der zum Ausführen einer Vorschubbewegung einen Druckluftimpuls erfährt. Der Druckluftimpuls veranlasst den Schwingdauermagneten in einer ersten Richtung zu beschleunigen. Des weiteren hat der Energiewandler eine Rückstelleinrichtung, welche dem Schwingdauermagneten zum Ausführen einer der Vorschubbewegung entgegengesetzte Rückstellbewegung eine Rückstellkraft mitteilt. Beim Mitteilen des Druckluftimpulses kann stetig die Rückstellkraft der Rückstelleinrichtung auf den Schwingdauermagnet wirken. Zu Beginn der Vorschubbewegung ist allerdings die durch den Druckluftimpuls ausgeübte Vorschubkraft größer als die Rückstellkraft. Erst wenn der Druckluftimpuls abnimmt oder verschwindet, überwiegt die Rückstellbeschleunigung der Rückstelleinrichtung und veranlasst die Rückstellbewegung. Durch die Vorschub- und Rückstellbewegung des Schwingdauermagneten bezüglich einer Spule des Energiewandlers wird elektrische Energie in der Spule des Energiewandlers induziert. Dabei kann die Spule innerhalb oder an dem Gehäuse integriert sein und umgibt zumindest teilweise den Bewegungspfad des sich hin- und herbewegenden Schwingdauermagneten. Erfindungsgemäß ist die Rückstelleinrichtung dazu ausgelegt, ein Magnetfeld zu erzeugen, das derartig gegenüber dem Schwingdauermagneten gepolt ist, das eine magnetische Abstoßrückstellkraft die Rückstellbewegung veranlasst. Das zu erzeugende Magnetfeld kann ständig wirken oder entsprechend eines elektrischen Regelungs- und/oder Steuerlogarithmus entsprechend zugeschaltet werden.

Es zeigte sich überraschenderweise, dass mit der Anordnung eines Magnetfelds zur Erzeugung einer Rückstellkraft relativ einfach eine regelmäßige und dauerhafte Hin- und Herbewegung erreicht werden kann, um elektrische Energie in der Spule zu induzieren, die zur weiteren Versorgung von Elektrokomponenten des elektropneumatischen Feldgeräts geeignet ist. Der Investitionsaufwand für das Einrichten des Magnetfelds ist gering. Gleiches gilt für die konstruktiven Maßnahmen zur Realisierung des Magnetfelds. Es sei klar, dass das Magnetfeld elektromagnetisch oder dauermagnetisch realisierbar ist. Gemäß der erfindungsgemäßen, abgestimmten Taktung eines pneumatischen Druckimpulses und einer magnetischen Rückstellkraft ist es möglich, einen leistungsfähigen Energiewandler für ein pneumatisch betriebenes Feldgerät zu schaffen, ohne bei der Fabrikation zu genaue Toleranzen für eine möglichst reibungsarme Führung für den Stellkolben oder den Schwingdauermagneten erreichen zu müssen.

Bei einer bevorzugten Ausführung der Erfindung ist die Rückstelleinrichtung ein insbesonders gegenüber der Spule des Energiewandlers ortsfester Dauermagnet. Um die gewünschte Rückstellkraft zu erzeugen, sind die gleichen Pole des Schwingdauermagneten sowie des Rückstellmagneten einander gegenüberliegend anzuordnen. Bei der Ausführung mit einem Dauermagneten als Rückstelleinrichtung wird die Taktung bei einer Hin- oder Herbewegung des Schwingdauermagnetens durch den getakteten Aufbau und Abbau des pneumatischen Impuls realisiert. Alternativ kann als magnetische Rückstelleinrichtung ein Elektromagnet herangezogen ist, der entsprechend getaktet wird, um die schwingende Hin- und Herbewegung des Schwingdauermagneten zu realisieren. Bei dieser alternativen Ausführung kann ein stetiger Druckimpuls dabei zur Kammer angelegt sein. Vorzugsweise ist allerdings die Ausführung mit einem Dauermagneten, da für diese Realisierung weniger elektrische Energie benötigt wird.

Bei einer Weiterbildung der Erfindung ist der Schwingdauermagnet oder ein den Schwingdauermagneten haltender Stellkolben für eine translatorische Vorschub- und Rückstellbewegung insbesondere mittels eines Gleitlagers in einem Hohlraum eines Gehäuses des Energiewandlers geführt. Die Bewegungsrichtung sowie die Bewegungsamplitude können derart eingestellt sein, dass der Schwingdauermagnet in die Spule ein- und austauchen kann, um die elektrische Energie zu induzieren.

Bei einer Weiterbildung der Erfindung hat der Energiewandler einen Stellkolben, an dem der Schwingdauermagnet fest angebracht ist. Vorzugsweise ist der Schwingdauermagnet an einem der Enden des Stellkolbens befestigt. Vorzugsweise ist der Stellkolben innerhalb einer Zylinderführung gelagert. Die Zylinderführung kann innerhalb des Gehäuses und durch die Gehäusewand des Energiewandlers geformt und begrenzt sein. In die Zylinderführung kann vorzugsweise ein Luftkanal münden, der in der Gehäusewand ausgebildet ist und über den Druckluft für den Aufbau des Druckluftimpulses zuführbar ist. Der Stellkolben und die Zylinderführung begrenzen eine pneumatische Arbeitskammer des Energiewandlers, die in Abhängigkeit von der Position des Schwingdauermagneten für einen Druckluftimpulsaufbau hermetisch geschlossen oder gegen Atmosphäre entlüftet werden kann. Bei geschlossenen Arbeitskammern wird der Druckluftimpuls aufgebaut. Bei entlüfteter Arbeitskammer überwiegt die Rückstellkraft des Magnetfelds und der Schwingdauermagnet wird in die Ausgangsstellung bewegt.

Bei einer bevorzugten Ausführung der Erfindung ist ein gegenüber dem Gehäuse des Energiewandlers ortsfester Zuluftkanal insbesondere in der Gehäusewand ausgebildet. Der Zuluftkanal mündet in die Arbeitskammer des Energiewandlers. Der ortsfeste Zuluftkanal kann durch den Schwingdauermagneten oder einen Stellkolben zum Aufbau des Druckimpulses beziehungsweise zum Druckabbau in der Arbeitskammer freigegeben beziehungsweise gesperrt werden. Vorzugsweise kann in dem Schwingdauermagneten oder dem Stellkolben ein beweglicher Belüftungskanal ausgebildet sein, der in einer Impulsstellung den Zuluftkanal zumindest teilweise überlappt, um den Druckluftimpuls in die pneumatische Arbeitskammer zu übertragen. Zudem kann ein beweglicher Entlüftungskanal in dem Schwingdauermagneten oder dem Stellkolben ausgebildet sein, der in einer Endstellung eine fluidale Verbindung zwischen Arbeitskammer und Atmosphäre, insbesondere einer Entlüftungskammer zum Druckabbau herstellt. Die Entlüftungskammer ist ebenfalls durch das Gehäuse des Energiewandlers begrenzt. In der Entlüftungskammer kann vorzugsweise der Schwingdauermagnet bei dessen Hin- und Herbewegung liegen. Die Entlüftungskammer ist vorzugsweise von der Spule teilweise umgeben.

Bei einer bevorzugten Ausführung der Erfindung sind der Be- und Entlüftungskanal durch denselben Wanddurchgang in dem Dauermagneten oder dem Stellkolben als Funktionsunion realisiert.

Bei einer Weiterbildung der Erfindung ist die Druckluftzufuhr in die Arbeitskammer von einem elektropneumatischen Ventil, insbesondere 2/2-Wegeventil, gesteuert. Die Schwingung des Kolbens wird zwangsgesteuert durch die Ansteuerung des 2/2-Wegeventils.

In einer weiteren Ausbildung ist die Druckluftzufuhr in die Arbeitskammer von einem elektropneumatischen Ventil, insbesondere einem 3/2-Wegeventil, gesteuert. In diesem Fall können der Schwingkolben und/oder der Schwingdauermagnet ohne den oben genannten Be-und Entlüftungskanal ausgeführt sein, da die Entlüftung durch das 3/2-Wegeventil erfolgt.

Bei einer bevorzugten Ausführung der Erfindung ist ein Druckregler zur pneumatischen Versorgung des Energiewandlers vorgesehen. Der Druckregler hält den Versorgungsdruck des Energiewandlers konstant, so dass die Schwingung des Kolbens aufrechterhalten wird. Da der Versorgungsdruck und die Größe der Pneumatikkanäle die mechanische Resonanzfrequenz beeinflussen, kommt dem konstanten Versorgungsdruck eine wesentliche Rolle zu, wenn die Schwingbedingungen konstant aufrechterhalten werden sollen.

Bei einer bevorzugten Ausführung der Erfindung hat die Spule einen elektrischen Kontakt zur Abnahme der erzeugten elektrischen Induktionsenergie. An dem elektrischen Kontakt ist eine Schaltung zum Regeln der abgenommenen elektrischen Leistung und/oder der an den Verbraucher abzugebenden elektrischen Leistung angeschlossen. Vorzugsweise ist die Leistungsregelungsschaltung mit einem elektrischen Speicher, wie einem Kondensator verbunden. Dabei ist die Leistungsregelungsschaltung derart konfiguriert, dass sie bei einer elektrischen Leistung, die größer als der aktuelle Verbrauch des elektrischen Verbrauchers ist, die darüber hinaus überschüssige aktuelle elektrische Abgabeleistung in den Speicher lädt.

Bei einer bevorzugten Ausführung der Erfindung ist der Leistungsregelungsschaltung ein Gleichrichter vorgeschaltet, der den durch den Energiewandler erzeugten Induktionswechselstrom in einen Gleichstrom umwandelt. Alternativ dazu oder auch in Kombination kann der Speicher mit einem Spannungsregler zur Entnahme elektrischer Energie verbunden sein. Der Spannungsregler regelt insbesondere zum Betreiben eines Verbrauchers, vorzugsweise des Feldgerätes, eine Versorgungsspannung von dem Speicher.

Bei einer bevorzugten Ausführung der Erfindung ist an einem elektrischen Anschluss der Spule und/oder an der Leistungsregelungsschaltung eine elektrische Steuer- oder Regeleinheit angeschlossen. Die Steuer- oder Regeleinheit stellt vorzugsweise eine Energieversorgung für ein mit der Arbeitskammer in pneumatischer Verbindung stehendes elektropneumatisches Ventil, insbesondere elektropneumatisches 2/2-Wegeventil oder 3/2-Wegeventil, bereit. Vorzugsweise ist die Steuer- und Regeleinheit derart ausgelegt, dass der Druckimpuls für den Schwingdauermagneten betriebsgemäß getaktet, insbesondere eingestellt, ist.

Bei einer bevorzugten Ausführung der Erfindung hat das erfindungsgemäße Feldgerät einen Stellungsregler, den ein pneumatischer Stellantrieb, insbesondere Schwenkantrieb, ansteuert. Der Stellungsregler hat einen Sensor zum Erfassen der Stellung eines von dem Stellantrieb gesteuerten Stellventils. Der Stellungsregler ist mit dem Sensor derart verbunden, dass das Stellventil für einen entsprechenden Stoffstrom der prozesstechnischen Anlage eingestellt ist.

Außerdem betrifft die Erfindung ein Verfahren zum Bereitstellen einer elektrischen Energieversorgung für ein elektropneumatisches Feldgerät, wie ein elektropneumatisches Schaltventil oder ein elektropneumatischer Stellungsregler. Bei dem Verfahren wird pneumatische Energie einer pneumatischen Energieversorgung in elektrische Energie umgewandelt. Dafür ist ein Schwingdauermagnet vorgesehen, der mittels eines Druckluftimpulses in eine Vorschiebbewegung verbracht wird. Erfindungsgemäß wird eine Rückstellbewegung des Dauermagneten aufgrund von magnetischen Abstoßungskräften realisiert.

Es sei klar, dass das erfindungsgemäße Verfahren gemäß zur Funktionsweise der erfindungsgemäßen elektropneumatischen Feldgeräts verfahren kann.

Weitere beispielhafte Ausführungen sind in den Unteransprüchen angegeben.

Weitere Eigenschaften, Vorteile und Merkmale der Erfindung sind durch die folgende Beschreibung eines bevorzugten Ausführungsbeispiels der Erfindung anhand der beiliegenden Zeichnungen erläutert, denen zeigen:
- Figur 1: eine schematische Querschnittsansicht eines erfindungsgemäßen Energiewandlers für ein elektropneumatisches Feldgerät in einem Druckimpulsbetriebszustand;
- Figur 2: die Querschnittsansicht des Energiewandlers gemäß Figur 1 in einem Entlüftungsbetriebszustand;
- Figur 3: eine schematische Querschnittsansicht eines erfindungsgemäßen, elektropneumatischen Feldgeräts, wobei der Energiewandler gemäß Figur 1 und 2 an eine elektrische Steuer- und/oder Regeleinheit angeschlossen ist, welche ein elektromagnetisches Ventil zum Aufbau des Druckluftimpulses steuert;
- Figur 4: eine schematische Prinzipskizze eines erfindungsgemäßen, elektropneumatischen Feldgeräts mit einem elektropneumatischen Stellungsregler, einem pneumatischen Stellantrieb sowie einem Stellventil einer prozesstechnischen Anlage; und
- Figur 5: eine schematische Querschnittsansicht des Energiewandlers nach Figur 1 und 2, der an eine Schaltung zum Regeln der induzierten elektrischen Leistung im Hinblick auf Last eines Verbrauchers angeschlossen ist.

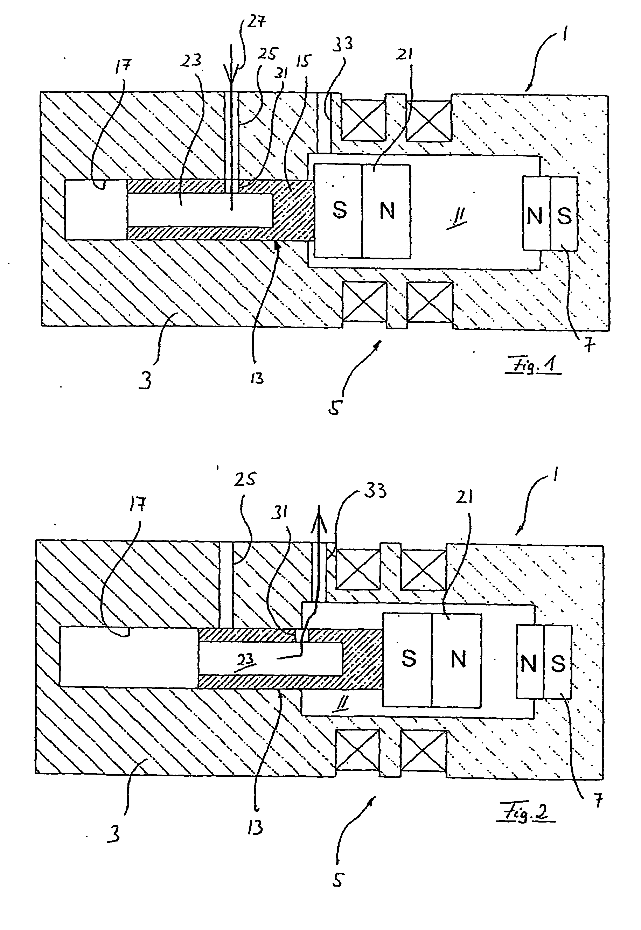

In Figur 1 ist der Energiewandler des erfindungsgemäßen, elektropneumatischen Feldgeräts im Allgemeinen mit der Bezugsziffer 1 versehen. Der Energiewandler 1 besteht im Wesentlichen aus 4 Hauptkomponenten, nämlich einem Zylindergehäuse 3, einer in dem Zylindergehäuse 3 integrierten Induktionsspulenanordnung 5, einem Rückstelldauermagneten 7, der an einem Ende einer in dem Zylindergehäuse 3 ausgebildeten Entlüftungskammer 11 angeordnet ist. Der Nordpol N des Rückstelldauermagneten 7 ist hin zur Entlüftungskammer ausgerichtet. Der Rückstellmagnet 7 liegt einer Kolbeneinrichtung 13 gegenüber, die einen Kolbenläufer 15 umfasst, der in dem Zylindergehäuse 3, das als zylinderförmige Druckkammer 17 ausgeführt ist, im wesentlichen unter Ausbildung von Fluiddichten Gleitflächen hin- und herbewegbar gelagert ist. An dem in die Entlüftungskammer 11 ragenden Ende des Kolbenläufers 15 ist ein Dauermagnet 21 angebracht, dessen Nordpol N dem Nordpol N des Rückstellmagneten 7 zugewandt ist.

Der Kolbenläufer 15, dessen Außenform zylindrisch ist, hat einen sacklochförmigen Hohlraum 23, der druckluftkammerseitig offen ist. In einer Wand des Zylindergehäuses 3 ist ein Zuluftkanal 25 ausgebildet, an dem eine Druckluftquelle angeschlossen ist, welche in Figur 1 mit dem Pfeil 27 repräsentiert ist. In den Hohlraum 23 mündend ist in der Wand des Kolbenläufers 15 ein Be- und Entlüftungsdurchgang 31 eingearbeitet, über den, wenn der Zuluftkanal 25 mit dem Durchgang 31 fluchtet, ein Luftdruck innerhalb der Druckkammer 17 aufgebaut wird, der eine Verlagerung der Kolbeneinrichtung 13 in der Zeichnungsdarstellung nach rechts veranlasst.

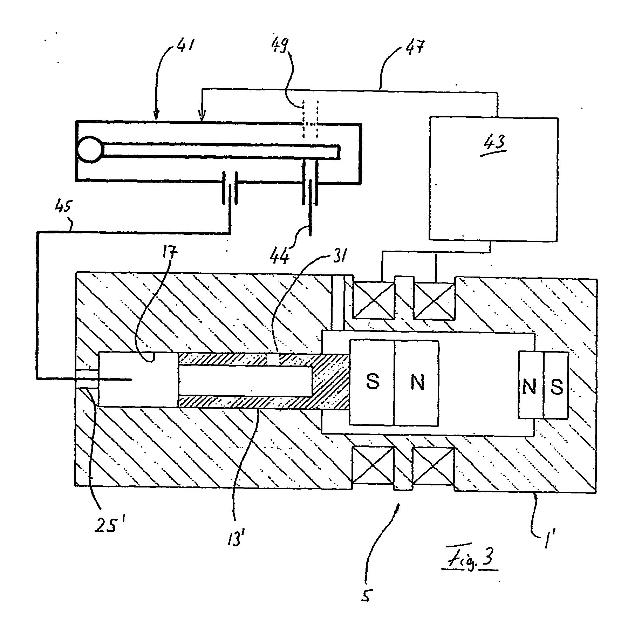

In Figur 2 ist eine derartige Verlagerung nach rechts im Wesentlichen in einer Endposition der ersten Hinbewegung der Kolbeneinrichtung 13 dargestellt. Wie weiterhin in Figur 2 ersichtlich ist, überlappt zumindest ein Teil des Be- und Entlüftungsdurchgangs 31 des Kolbenläufers 15 die Entlüftungskammer 11, wodurch der in der Druckluftarbeitskammer 17 aufgebaute Überdruck abgebaut wird. Die Entlüftungskammer 11 verfügt über einen in dem Zylindergehäuse 3 ausgebildeten Entlüftungskanal 33. Mit dem fehlenden erhöhten Luftdruck in der Druckluftarbeitskammer 17 veranlassen die zwischen den Dauermagneten 7, 21 wirkenden magnetischen Abstoßungskräfte eine Zurückverlagerung der Kolbeneinrichtung 13 gemäß Figurdarstellung nach links, wodurch der Überlappungsbereich mit dem Be- und Entlüftungsdurchlass 31 verschwindet und ein Luftdruckneuaufbau über den Zuluftkanal 25 realisierbar ist. Bei entsprechender Luftdruckbeaufschlagung der Arbeitskammer 17, abgestimmt auf die zwischen den Dauermagneten 7, 21 herrschenden Abstoßungskräfte, realisiert der Energiewandler eine Hin- und Herbewegung der Kolbeneinrichtung 13 samt dem Dauermagneten 21, wodurch in der Spulenanordnung 5 ein elektrischer Strom induziert wird, der einer elektrischen Schaltung 43, 51 zugeführt wird, wie in den Figuren 3, 4 oder 5 dargestellt ist. Es sei klar, dass für den ortsfesten Dauermagneten 7 auch andere Einrichtungen zur Erzeugung einer magnetischen Rückstellkraft eingesetzt werden können, beispielsweise ein Elektromagnet. In den Figuren 1 und 2 ist die Spulenanordnung 5 durch zwei parallel geschaltete Spulen realisiert; es sei klar, dass auch eine Einzelspule oder mehr als zwei Spulen oder in Reihe geschaltete Spulen verwendet werden können. Die Anzahl der Spulen kann von der Amplitude der Hin- und Herbewegung der Kolbeneinrichtung 13 abhängen.

Wie die induzierte elektrische Energie an der Spulenanordnung 5 genutzt werden kann, ist beispielsweise in den Figuren 3, 4 und 5 dargestellt. Die elektrische Energie wird zur energetischen Versorgung eines Verbrauchers des erfindungsgemäßen elektropneumatischen Feldgeräts 1, wie eines Stellungsreglers, eines Stellungssensors etc., benutzt. Zusätzlich oder alternativ ist es möglich, die gewonnene elektrische Energie zumindest teilweise dazu zu benutzen, die elektrische Erregerenergie zum Erzeugen des Druckluftimpulses in der pneumatischen Arbeitskammer 17 bereitzustellen. Zum Erzeugen eines insbesondere getakteten Druckimpulses in der pneumatischen Arbeitskammer 17 kann die Arbeitskammer 17, wie in Figur 3 dargestellt ist, über einen Belüftungskanal 25' an ein elektropneumatisches Ventil angeschlossen sein, das in Figur 3 die Bezugsziffer 41 trägt. Das Ventil kann als 2/2-Wegeventil oder 3/2-Wegeventil ausgeführt sein, wobei im Falle eines 3/2-Wegeventils ein Entlüftungsausgang 49 bereitgestellt ist. In diesem Fall kann der Energiewandler 1 gemäß Figur 3 gegenüber der Ausführung nach den Figuren 1 und 2 eine einfachere strukturelle Gestalt insofern annehmen, als der Be- und Entlüftungsdurchgang 31 entbehrlich ist, da eine getaktete Be- und Entlüftung der Arbeitskammer 17 durch das elektropneumatische Ventil 41 realisiert wird. Das elektropneumatische Ventil 41 ist an eine Druckluftquelle 44 angeschlossen, die insbesondere einen konstanten Luftdruck von beispielsweise 6 bar bereitstellen kann.

Das elektropneumatische Ventil 41 wird von einem Regler 43 betrieben, wobei der durch das Ventil 41 erzeugte Druckimpuls, der über die Leitung 45 von dem Ventil 41 in die Arbeitskammer 17 geleitet wird, von einer Regelgröße eingestellt wird, die über die Leitung 47 in Figur 3 von der Regelungseinheit 43 zum elektropneumatischen Ventil 41 übertragen wird. Die Regelungseinheit 41 hat die Aufgabe, elektrische Energie für das Ventil 41 bereitzustellen, sowie einen getakteten Regelungsimpuls, der entsprechend einen Druckimpuls in der Arbeitskammer 17 erzeugen soll, damit die Kolbeneinrichtung 13' die entsprechende Kraft zur Verlagerung relativ zu der Spulenanordnung 5 erfährt. Dabei hat der Regler 43 die Aufgabe, diejenige Energie zu verwenden, die von einem nicht dargestellten Verbraucher nicht benötigt wird, welcher Verbraucher von der gewonnenen Induktivenergie an der Spulenanordnung 5 versorgt wird. Mit der in Figur 3 dargestellten Ausführung ist es möglich, den Energieverbrauch für die Energieumwandlungseinrichtung, was den elektrischen Teil betrifft, deutlich zu reduzieren. Die in Fülle vorliegende pneumatische Energie kann mit einem hohen Wirkungsgrad in elektrische Energie umgewandelt werden.

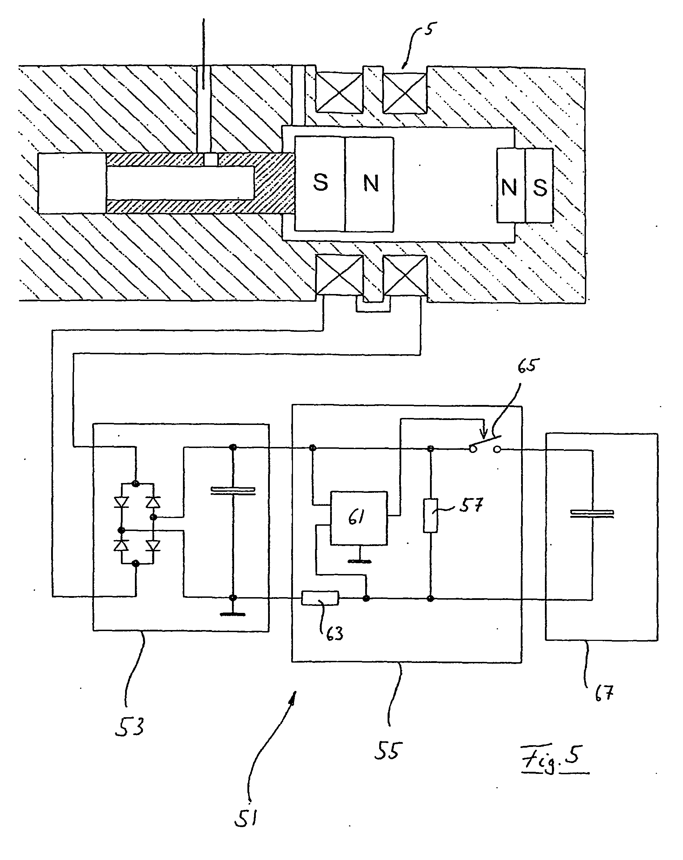

In Figur 5 ist ein mögliches Verbrauchersystem an die Spulenanordnung 5 angeschlossen und im Allgemeinen mit der Bezugsziffer 51 versehen. Es sei klar, dass bei einer besonderen Ausführung sowohl das Verbrauchersystem 51 als auch die Druckimpulseinrichtung gemäß Figur 3 an die Spulenanordnung 5 angeschlossen sein können.

Das Verbrauchersystem 51 hat im unmittelbaren Anschluss an die Spulenanordnung 5 einen Gleichrichter 53, der den induzierten Wechselstrom an der Spulenanordnung 5 in Gleichstrom umwandelt. Die Ausführung des Gleichrichters 53 ist herkömmlich.

An den Gleichrichter 53 schließt eine Schaltung 55 zur Regelung der induzierten elektrischen Leistung im Hinblick auf Last eines Verbrauchers an, der in Figur 5 durch einen Lastwiderstand 57 repräsentiert sein soll.

Die Leistungsregelungsschaltung 55 hat eine Leistungsmesseinrichtung 61 sowie einen Strommesswiderstand 63. Je nachdem wie groß die induzierte elektrische Energie an der Spulenanordnung 5 ist, wird ein Schalter 65 von der Leistungsmesseinrichtung 61 betätigt, nämlich dann, wenn die induzierte elektrische Energie größer als die von dem Verbraucher 57 angeforderte Leistung ist. Die überschüssige Energie wird in einem an die Schaltung anschließenden Speicher 67 übertragen, der beispielsweise als Kondensator ausgebildet sein kann.

Sollte keine überschüssige elektrische Energie vorliegen, wird der Schalter 65 geöffnet. Der Speicher 67 kann dazu geeignet sein, sowohl den Verbraucher 57 zu versorgen, als auch die elektrische Regelungseinheit 43.

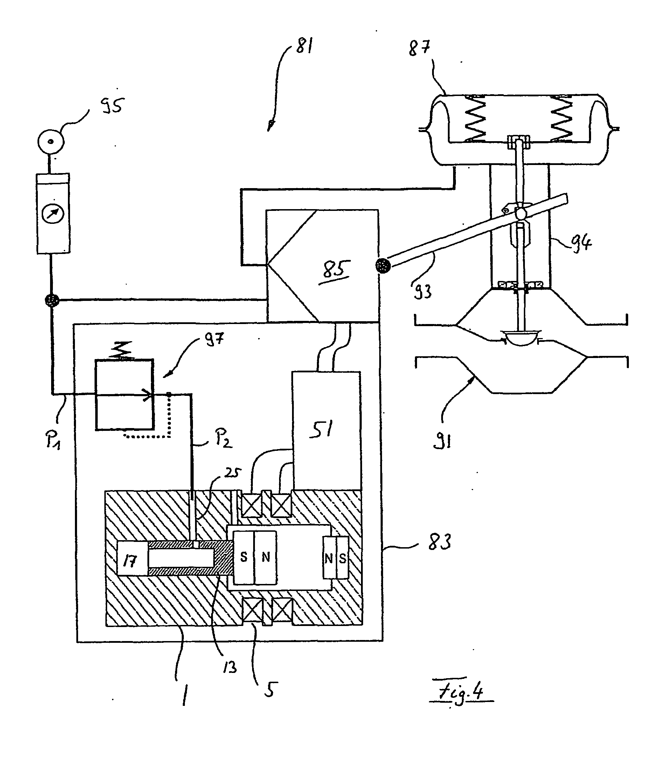

In Figur 4 ist ein vollständiges, erfindungsgemäßes, elektropneumatisches Feldgerät im Allgemeinen mit der Bezugsziffer 81 versehen und umfasst den oben beschriebenen Energiewandler 1, der in einem geschlossenen Gehäuse 83 untergebracht ist. An der Außenseite des Gehäuses 83 kann ein elektropneumatischer Stellungsregler 85 angeflanscht sein, der einen pneumatischen Stellantrieb 87 betätigt. Der pneumatische Stellantrieb 87 ist in dem in Figur 4 gezeigten Beispiel als Hubantrieb realisiert. Eine an einer beweglichen Plattenmembrananordnung befestigte Stangenanordnung ist mit einem Ventilglied eines Stellventils 94 gekoppelt, das einen nicht näher dargestellten Stoffstrom einer prozesstechnischen Anlage einstellt. Ein Positionssensor 93 ist dazu ausgelegt, Positionssignale dem Stellungsregler 85 mitzuteilen, und ist in Figur 4 mechanisch ausgeführt.

Der Stellungsregler 85 ist an eine pneumatische Druckquelle 95 von beispielsweise 6 bar angeschlossen. Im Anschluss an die pneumatische Druckquelle 95 ist ein Filter vorgesehen. In dem Gehäuse 83 des Energiewandlers 1 ist ein Druckminderer 97 angeordnet, der einen Druck p1 empfängt und einen Druck p2 an den Zuluftkanal 25 des Energiewandlers 1 abgibt. Der Druckminderer 97 hat die Aufgabe, den Ausgangsdruck p2 derart einzustellen, dass er konstant ist und im Wesentlichen der Resonanzfrequenz des Schwingungssystems des Kolbenläufers 13 entspricht. In dem besonderen Beispiel kann Druck p2 bei 1,5 bar liegen.

An der Spulenanordnung 5 ist ein Verbrauchersystem samt einer Energiemanagementfunktionalität angeschlossen, wodurch ein elektrischer Verbraucher des elektromagnetischen Stellungsreglers 85 energetisch versorgt ist.

Der Druckminderer 97 hat die Aufgabe, entsprechend der Be- und Entlüftung der Druckluftarbeitskammer 17 eine schwingende Hin- und Herbewegung des Läuferkolbens 13 zu veranlassen, um eine entsprechende elektrische Energie an der Spulenanordnung 5 zu erzeugen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

| | |
|---|---|
| 1 | Energiewandler |
| 3 | Zylindergehäuse |
| 5 | Induktionsspulenanordnung |
| 7 | Rückstelldauermagnet |
| 11 | Entlüftungskammer |
| 13 | Kolbeneinrichtung |
| 15 | Kolbenläufer |
| 17 | Druckkammer |
| 21 | Dauermagnet |
| 23 | Hohlraum |
| 25 | Zuführkanal |
| 27 | Druckluftquelle |
| 31 | Be- und Entlüftungsdurchgang |
| 33 | Entlüftungskanal |
| 41 | elektropneumatisches Ventil |
| 43 | Regelungseinheit |
| 44 | Druckluftquelle |
| 45 | Leitung |
| 47 | Signalleitung |
| 49 | Entlüftung |
| 51 | Verbrauchersystem |
| 55 | Schaltung |
| 57 | Lastwiderstand |
| 61 | Leistungsmesseinrichtung |
| 63 | Strommesswiderstand |
| 65 | Schalter |
| 67 | Speicher |
| 81 | elektropneumatisches Feldgerät |
| 83 | geschlossenes Gehäuse |
| 85 | elektropneumatischer Stellungsregler |
| 87 | pneumatischer Stellantrieb |
| 93 | Positionssensor |
| 94 | Stellventil |
| 95 | Druckquelle |
| 97 | Druckminderer |

## Patentansprüche

1. Elektropneumatisches Feldgerät, wie elektropneumatischer Umformer oder elektropneumatischer Stellungsregler, zum Ansteuern eines pneumatischen Stellantriebs, umfassend einen Energiewandler (1), der pneumatische Energie insbesondere einer pneumatischen Energiequelle des Stellantriebs in elektrische Energie umwandelt und einen Schwingdauermagneten (21), der zum Ausführen einer Vorschubbewegung einen Druckluftimpuls erfährt, sowie eine Rückstelleinrichtung (7) aufweist, welche dem Schwingdauermagneten (21) zum Ausführen einer der Vorschubbewegung entgegengesetzten Rückstellbewegung eine Rückstellkraft mitteilt, wobei durch die Vorschub- und Rückstellbewegung des Schwingdauermagneten (21) elektrische Spannung in einer Spule (5) des Energiewandlers (1) induziert ist, wobei die Rückstelleinrichtung (7) dazu ausgelegt ist, ein Magnetfeld zu erzeugen, das derart gegenüber dem Schwingdauermagneten (21) gepolt ist, dass eine magnetische Abstoßrückstellkraft die Rückstellbewegung veranlasst, **dadurch gekennzeichnet, dass** ein Druckregler zur pneumatischen Versorgung des Energiewandlers (1) vorgesehen ist.

2. Feldgerät nach Anspruch 1, **dadurch gekennzeichnet, dass** die Rückstelleinrichtung (7) ein insbesondere gegenüber der Spule (5) des Energiewandlers (1) ortsfester Dauermagnet ist, wobei gleiche Pole der Magnete aneinander zugeordnet gegenüberliegen.

3. Feldgerät nach Anspruch 1 oder 2, **dadurch gekennzeichnet, dass** der Schwingdauermagnet (21) für eine translatorische Vorschub- und Rückstellbewegung insbesondere mittels eines Gleitlagers in einem Hohlraum eines Gehäuses (3) des Energiewandlers (1) gehalten ist, so dass der Schwingdauermagnet (21) in die Spule ein- und austauchen kann, und/oder dass der Energiewandler einen Stellkolben (15) aufweist, an dem der Schwingdauermagnet (21) fest angebracht ist, und insbesondere der Stellkolben innerhalb einer Zylinderführung gelagert ist, wobei vorzugsweise in die Zylinderführung ein Zuluftkanal (25) mündet, über den Druckluft für den Druckluftimpuls zuführbar ist, wobei insbesondere der Stellkolben und die Zylinderführung eine pneumatische Arbeitskammer (17) begrenzen, die in Abhängigkeit von der Position des Schwingdauermagneten für einen Druckluftimpulsaufbau hermetisch geschlossen oder insbesondere gegenüber Atmosphäre entlüftet ist.

4. Feldgerät nach einem der vorstehenden Ansprüche, **dadurch gekennzeichnet, dass** ein ortsfester Zuluftkanal (25) in die Arbeitskammer (17) mündet, wobei der ortsfeste Zuluftkanal (25) durch den Schwingdauermagneten (21) oder einen Stellkolben (15), an dem der Schwingdauermagnet (21) angebracht ist, zum Aufbau des Druckimpulses beziehungsweise zum Druckabbau in der Arbeitskammer (17) freigegeben beziehungsweise gesperrt werden kann, wobei insbesondere in dem Schwingdauermagneten (21) oder dem Stellkolben ein beweglicher Be- und Entlüftungskanal (31), der in einer Impulsstellung den Zuluftkanal (25) zumindest teilweise überlappt, um den Druckluftimpuls in die pneumatische Arbeitskammer (17) zu übertragen, und in einer Endstellung eine fluidale Verbindung zwischen der Arbeitskammer (17) und der Atmosphäre, insbesondere einer Entlüftungskammer (11), zum Druckabbau herzustellen, in welcher Entlüftungskammer (11) vorzugsweise der Schwingdauermagnet (21) bei dessen Hin- und Herbewegung liegt und/oder welche Entlüftungskammer (11) von der Spule (5) teilweise umgeben ist, wobei insbesondere der Be- und Entlüftungskanal (31) durch den selben Wanddurchgang in dem Schwingdauermagneten (21) oder dem Stellkolben (15) realisiert ist.

5. Feldgerät nach einem der vorstehenden Ansprüche, **dadurch gekennzeichnet, dass** die Druckluftzufuhr in die Arbeitskammer (17) von einem elektropneumatischen Ventil (41), insbesondere einem 2/2-Wegeventil oder einem 3/2-Wegeventil, gesteuert ist sowie/oder dass der Schwingkolben (15) und/oder der Schwingdauermagnet (21) ohne einen Be- und Entlüftungskanal ausgeführt ist/sind.

6. Feldgerät nach einem der vorstehenden Ansprüche, **dadurch gekennzeichnet, dass** der Druckregler Teil des Energiewandlers (1) ist und insbesondere den Versorgungsdruck des Energiewandlers (1) konstant hält, so dass die Schwingung des Kolbens (15) aufrecht erhalten wird.

7. Feldgerät nach einem der vorstehenden Ansprüche, **dadurch gekennzeichnet, dass** die Spule (5) einen elektrischen Kontakt zur Abnahme der induzierten elektrischen Energie aufweist, an dem insbesondere eine Schaltung (55) zum Regeln der abgenommenen und/oder der einem Verbraucher abzugebenden elektrischen Leistung angeschlossen ist, wobei insbesondere die Leistungsregelungsschaltung (55) mit einem elektrischen Speicher (67), wie einem Kondensator, verbunden ist, wobei vorzugsweise die Leistungsregelungsschaltung (55) bei einer erzeugten elektrischen Leistung die größer als der Verbrauch des jeweiligen elektrischen Verbrauchers ist, eine darüber hinaus überschüssige elektrische Leistung in den Speicher (67) lädt.

8. Feldgerät nach Anspruch 7, **dadurch gekennzeichnet, dass** der Leistungsregelungsschaltung (55) ein Gleichrichter (53) vorgeschaltet ist, der den induzierten Wechselstrom in einen Gleichstrom umwandelt, und/oder der Speicher (67) mit einen Spannungsregler zur Entnahme elektrischer Energie verbunden ist, wobei der Spannungsregler insbesondere zum Betreiben eines Verbrauchers, insbesondere des Feldgerätes, eine Versorgungsspannung von dem Speicher (67) regelt.

9. Feldgerät nach einem der vorstehenden Ansprüche, **dadurch gekennzeichnet, dass** an einem elektrischen Anschluss der Spule, insbesondere an der Leistungsregelungsschaltung (55), eine elektrische Steuer- oder Regeleinheit (43) angeschlossen ist, welche ein mit der Arbeitskammer (17) des Energiewandlers (1) in pneumatischer Verbindung stehendes elektropneumatisches Ventil (41), insbesondere elektropneumatisches 2/2-Wegeventil oder 3/2-Wegeventil, energetisch versorgt, und insbesondere derart ansteuert, dass der Druckluftimpuls für den Schwingdauermagneten (21) betriebsgemäß eingestellt ist.

10. Verfahren zum Bereitstellen einer elektrischen Energieversorgung für ein pneumatisches Feldgerät, das insbesondere nach den Ansprüchen 1 bis 9 ausgebildet ist, wobei pneumatische Energie einer pneumatischen Energieversorgung in elektrische Energie umgewandelt wird, indem ein Schwingdauermagnet (21) mittels Druckluftimpulsbeaufschlagung in eine Vorschubbewegung gebracht wird, wobei der Schwingdauermagnet (21) aufgrund eines Magnetfeldes in eine Rückstellbewegung verbracht wird, **dadurch gekennzeichnet, dass** dass der Druck der pneumatischen Versorgung geregelt wird.

## Claims

1. An electropneumatic field device, such as an electropneumatic transducer or an electropneumatic positioner, for purposes of controlling a pneumatic actuator, comprising an energy converter (1), which converts the pneumatic energy in particular of a pneumatic energy source of the actuator into electrical energy, and an oscillating permanent magnet (21), which for purposes of executing a feed movement experiences a compressed air pulse, and also has a reset device (7), which communicates a restoring force to the oscillating permanent magnet (21) for purposes of executing a restoring movement opposed to the feed movement, wherein by means of the feed movement and restoring movement of the oscillating permanent magnet (21) an electrical voltage is induced in a coil (5) of the energy converter (1), wherein the reset device (7) is designed for the purpose of generating a magnetic field, which is polarised relative to the oscillating permanent magnet (21), such that a magnetic repulsive restoring force initiates the restoring movement, **characterised in that** a pressure regulator is provided for purposes of the pneumatic supply to the energy converter (1).

2. The field device in accordance with Claim 1, **characterised in that**, the reset device (7) is a permanent magnet that in particular is stationary relative to the coil (5) of the energy converter (1), wherein same poles of the magnets are assigned opposite one another.

3. The field device in accordance with Claim 1 or 2, **characterised in that** for translational feed and restoring movements the oscillating permanent magnet (21) is held in particular by means of a plain bearing in a cavity of a housing (3) of the energy converter (1), such that the oscillating permanent magnet (21) can be introduced into and removed from the coil, and/or such that the energy converter has a control piston (15), to which the oscillating permanent magnet (21) is securely attached, and in particular the control piston is mounted within a cylindrical guide, wherein an air supply passage (25) preferably leads into the cylindrical guide, via which passage the compressed air can be supplied for the compressed air pulse, wherein in particular the control piston and the cylindrical guide bound a pneumatic working chamber (17), which, depending upon the position of the oscillating permanent magnet, is hermetically sealed for a build-up of a compressed air pulse, or in particular is vented to atmosphere.

4. The field device in accordance with one of the preceding claims, **characterised in that** a stationary air supply passage (25) leads into the working chamber (17), wherein the stationary air supply passage (25), can be released or blocked by means of the oscillating permanent magnet (21), or a control piston (15) to which the oscillating permanent magnet (21) is attached, for purposes of building up the pressure pulse or reducing the pressure in the working chamber (17) respectively, wherein a movable pressurising and venting passage (31) is provided in particular in the oscillating permanent magnet (21) or in the control piston, which in a pulse setting at least partly overlaps the air supply passage (25) so as to transfer the compressed air pulse into the pneumatic working chamber (17), and in an end setting provides a fluid connection between the working chamber (17) and the atmosphere, in particular a venting chamber (11) so as to provide a pressure reduction, in which venting chamber (11) the oscillating permanent magnet (21) is preferably located during its to and fro movements, and/or which venting chamber (11) is partially surrounded by the coil (5), wherein in particular the pressurising and venting passage (31) is implemented in terms of the same wall opening in the oscillating permanent magnet (21) or the control piston (15).

5. The field device in accordance with one of the preceding claims, **characterised in that** the compressed air supply into the working chamber (17) is controlled by an electropneumatic valve (41), in particular a 2/2-way valve or a 3/2-way valve, and/or **in that** the oscillating piston (15) and/or the oscillating permanent magnet (21) is/are embodied without a pressurising and venting passage.

6. The field device in accordance with one of the preceding claims, **characterised in that** the pressure regulator is part of the energy converter (1) and in particular holds constant the supply pressure of the energy converter (1), such that the oscillation of the piston (15) is sustained.

7. The field device in accordance with one of the preceding claims, **characterised in that** the coil (5) has an electrical contact for purposes of removal of the induced electrical energy, to which in particular a circuit (55) is connected for purposes of regulating the electrical power removed, and/or to be delivered to a load, wherein in particular the power regulation circuit (55) is connected with an electrical store (67) such as a capacitor, wherein in the event that the electrical power generated is greater than the consumption of the electrical load in question, the power regulation circuit (55) loads any excess electrical power into the store (67).

8. The field device in accordance with Claim 7, **characterised in that**, a rectifier (53) is connected upstream of the power regulation circuit (55), which rectifier converts the induced alternating current into a direct current, and/or the store (67) is connected with a voltage regulator for purposes of extracting electrical energy, wherein the voltage regulator regulates a supply voltage from the store (67), in particular for purposes of operating a load, in particular the field device.

9. The field device in accordance with one of the preceding claims, **characterised in that**, an electrical control or regulation unit (43) is connected to an electrical connection to the coil, in particular to the power regulation circuit (55), which unit supplies energy to a electropneumatic valve (41) that is pneumatically connected with the working chamber (17) of the energy converter (1), in particular an electropneumatic 2/2-way valve or a 3/2-way valve, and in particular controls the valve such that the compressed air pulse for the oscillating permanent magnet (21) is adjusted in accordance with operational requirements.

10. A method for the provision of an electrical energy supply for a pneumatic field device, which in particular is designed in accordance with Claims 1 to 9, wherein pneumatic energy of a pneumatic energy supply is converted into electrical energy, in that an oscillating permanent magnet (21) is brought into a feed movement by means of subjection to a compressed air pulse, wherein the oscillating permanent magnet (21) by virtue of a magnetic field is brought into a restoring movement, **characterised in that**, the pressure of the pneumatic supply is regulated.

## Revendications

1. Appareil de terrain électropneumatique, tel un transformateur ou un régulateur de position électropneumatique, pour piloter un actionneur pneumatique, comprenant un convertisseur d'énergie (1) qui convertit de l'énergie pneumatique, en particulier d'une source d'énergie pneumatique de l'actionneur, en énergie électrique et qui présente un aimant permanent oscillant (21) qui est soumis à une impulsion d'air comprimé pour effectuer un mouvement d'avance ainsi qu'un dispositif de retour (7), lequelapplique une force de retour à l'aimant permanent oscillant (21) pour effectuer un mouvement de retour opposé au mouvement d'avance,moyennant quoi grâce au mouvement d'avance et de retour de l'aimant permanent oscillant (21) une tension électrique est induite dans une bobine (5) du convertisseur d'énergie (1), moyennant quoi le dispositif de retour (7) est étudié pour générer un champ magnétiquepolarisé de telle manière par rapport à l'aimant permanent oscillant (21) qu'une force de retour répulsive magnétique provoque le mouvement de retour, **caractérisé en ce que** l'on prévoit un régulateur de pression pour l'alimentation pneumatique du convertisseur d'énergie (1).

2. Appareil de terrain selon la revendication 1, **caractérisé en ce que** le dispositif de retour (7) est un aimant permanent en particulier stationnaire par rapport à la bobine (5) du convertisseur d'énergie (1), des pôles identiques des aimants étant situés en vis-à-vis l'un de l'autre de manière associée.

3. Appareil de terrain selon la revendication 1 ou 2, **caractérisé en ce que** l'aimant permanent oscillant (21) est maintenu, en particulier à l'aide d'un palier lisse, dans un espace creux d'un boîtier (3) du convertisseur d'énergie (1) pour un mouvement de translation d'avance et de retourde manière à ce quel'aimant permanent oscillant (21) puisse plonger dans la bobine et en ressortir, et/ou **en ce que** le convertisseur d'énergie présente un piston de réglage (15) sur lequel l'aimant permanent oscillant (21) est attaché de manière fixe, et le piston de réglage étant en particulier logé à l'intérieur d'une chemise de cylindre, un canal d'entrée d'air (25) débouchant de préférence dans la chemise de cylindre, via lequel de l'air comprimé peut être acheminé pour l'impulsion d'air comprimé, moyennant quoi en particulier le piston de réglage et la chemise de cylindre délimitent une chambre de travail pneumatique (17), laquelle est hermétiquement fermée ou en particulier désaérée par rapport à l'atmosphère en fonction de la position de l'aimant permanent oscillant pour la formation d'une impulsion d'air comprimé.

4. Appareil de terrain selon l'une des revendications précédentes, **caractérisé en ce qu'**un canal d'entrée d'air stationnaire (25) débouche dans la chambre de travail (17), le canal d'entrée d'air stationnaire (25) pouvant être ouvert et/ou fermé par l'aimant permanent oscillant (21) ou par un piston de réglage (15) sur lequel l'aimant permanent oscillant (21) est mis en place pour la formation de l'impulsion de pression et/ou pour la réduction de pression dans la chambre de travail (17), moyennant quoi un canal d'aération et de désaération (31) mobile est en particulier réalisé dans l'aimant permanent oscillant (21) ou le piston de réglage, lequel se superpose au moins en partie au canal d'entrée d'air (25) dans une position d'impulsion afin de transférer l'impulsion d'air comprimé dans la chambre de travail pneumatique (17) et établir,dans une position finale,une liaison fluidique entre la chambre de travail (17) et l'atmosphère, en particulier d'une chambre de désaération (11), afin de réduire la pression, dans laquelle chambre de désaération (11) se situe de préférence l'aimant permanent oscillant (21) lors de son mouvement de va-et-vient et/ou laquelle chambre de désaération (11) est partiellement entourée par la bobine (5), moyennant quoi le canal d'aération et de désaération (31) est en particulier réalisé par la même traversée de paroi dans l'aimant permanent oscillant (21) ou le piston de réglage (15).

5. Appareil de terrain selon l'une des revendications précédentes, **caractérisé en ce que** l'amenée d'air comprimé dans la chambre de travail (17) est commandée par une vanne électropneumatique (41), en particulier une vanne 2/2 voies ou une vanne 3/2 voies, et/ou en ce que le piston oscillant (15) et/ou l'aimant permanent oscillant (21) est/sont réalisé(s) sans canal d'aération et de désaération.

6. Appareil de terrain selon l'une des revendications précédentes, **caractérisé en ce que** le régulateur de pression est une partie du convertisseur d'énergie (1) et garde en particulier constante la pression d'alimentation du convertisseur d'énergie (1) de sorte à maintenir l'oscillation du piston (15).

7. Appareil de terrain selon l'une des revendications précédentes, **caractérisé en ce que** la bobine (5) présente un contact électrique pour la prise de l'énergie électrique induite, auquel est raccordé en particulier un circuit (55) pour réguler la puissance électrique prise et/ou à donner à un consommateur, moyennant quoi le circuit régulateur de puissance (55) est en particulier relié à un accumulateur électrique (67) tel un condensateur, moyennant quoi, en cas de puissance électrique générée laquelle est supérieure à la consommation du consommateur électrique respectif, le circuit régulateur de puissance (55) charge de préférence une puissance électrique excédentaire à cette consommation dans l'accumulateur (67).

8. Appareil de terrain selon la revendication 7, **caractérisé en ce qu'**un redresseur (53) est monté en amont du circuit régulateur de puissance (55), lequel convertit le courant alternatif induit en courant continu et/ou **en ce que** l'accumulateur (67) est relié à un régulateur de tension pour prélever de l'énergie électrique, moyennant quoi le régulateur de tension régule une tension d'alimentation de l'accumulateur (67) en particulier pour faire fonctionner un consommateur, en particulier l'appareil de terrain.

9. Appareil de terrain selon l'une des revendications précédentes, **caractérisé en ce qu'**une unité de commande ou de régulation électrique (43) est raccordée à un raccordement électrique de la bobine, en particulier au circuit régulateur de tension (55), laquelle unité alimente énergétiquement une vanne électropneumatique (41) en liaison pneumatique avec la chambre de travail (17) du convertisseur d'énergie (1), en particulier une vanne 2/2 voies ou une vanne 3/2 voies électropneumatique, et la pilote en particulier de manière à régler l'impulsion d'air comprimé de manière conforme au fonctionnement pour l'aimant permanent oscillant (21).

10. Procédé pour la mise à disposition d'une alimentation d'énergie électrique pour un appareil de terrain pneumatique, lequel est réalisé en particulier selon les revendications 1 à 9, moyennant quoi de l'énergie pneumatique d'une alimentation d'énergie pneumatique est convertie en énergie électrique en ce que l'on fait passer un aimant permanent oscillant (21) à un mouvement d'avance à l'aide d'une application d'impulsion d'air comprimé, moyennant quoi l'on fait passer l'aimant permanent oscillant (21) à un mouvement de retour en raison d'un champ magnétique, **caractérisé en ce que** la pression de l'alimentation pneumatique est régulée.
